# EUROPEAN PATENT APPLICATION

(11) **EP 2 663 080 A1**
(43) Date of publication of application: **13.11.2013**
(21) Application number: 12305523.8
(22) Date of filing: 11.05.2012
(51) Int. Cl.: H04N 9/31

(54) **Image projection method on a color non neutral projection surface**

(71) Applicant: ST-Ericsson SA, 1228 Plan-les-Ouates (CH)
(72) Inventor: Roffet, Frédérique, 38500 COUBLEVIE (FR); Cuisenier, Laurent, 38300 BOURGOIN JALLIEU (FR)
(74) Representative: Hirsch & Associés

(57) **Abstract**

The embodiments concern an image projection method on a color non neutral projection surface, comprising capturing (S1) one shot of said projection surface, computing (S2) a color bias of a bare projection surface which is at least a portion of said captured projection surface, computing (S3) a color correction corresponding to said color bias, applying (S4) said color correction to several images projected on said projection surface.

## Description

### TECHNICAL FIELD

The embodiments relate to image projection methods on a color non neutral projection surface and to user equipments adapted to implement image projection methods on a color non neutral projection surface and including at least a projector.

### BACKGROUND

Projectors are devices projecting information or data from different sources on a surface or on a support. The information or the data are either still, like for example images or slides, or moving, like for example video or animation. Sources can be for example computer, filmstrip or transparent slides.

The surface or the display on which the information is projected is generally a surface larger than the source. For example, the data can be projected on any object or on any surface available in daily life, like for example on white walls or on specific projection screens, or on the ground or on a stone. Applications can be to watch a movie or to share information during a meeting.

Nevertheless, if the surface is not white or at least not color neutral, the color rendering of the projected data will be biased. To be able to project data on a surface not necessary white or color neutral, it may be needed to adapt the color of the information to keep a natural appearance of the projected data. A projection surface is color neutral when it has the same level of red, green and blue channels. For example, a white projection surface, or a grey projection surface, or a black projection surface, are all color neutral projection surfaces. The difference between white, grey and black, is not a color difference but only a luminance difference which is another topic than the color balance management.

According to a first prior art, in some manual methods, it may be possible to manually modify the color source in projector devices settings. The same settings will probably be available in pico-projectors too. Nevertheless, it requires a user interaction in specific settings which is not natural for everybody among potential users.

According to a second prior art, for example described in US 6950109, an automatic pixel by pixel correction is implemented. A first drawback is that, even if assuming the capture and projection are possible at same time in the device implementing the image projection method, what may not always be the case, to be able to align the information from the captured image and from the source is still not that easy, because the camera will not shot only the data but also the background. This implies to be able to differentiate exactly the data from the background, what may reveal rather difficult to perform. A second drawback is that the data projected may not be the same size as the input data because it depends on the sensor resolution and the zoom tuning. Indeed, the scaling step makes difficult the pixel by pixel comparison and biases the result, especially if both input data and captured image are not exactly aligned with each other. A third drawback is that a pixel by pixel comparison is a long process. A fourth drawback can be that, in case of video projection, problems of stabilization constrain the user to repeat all the previous process for each frame. Moreover, capturing a frame to correct it during a video implies a retroaction and the correction found for a frame at time t will be applied to the frame at time t+1, what makes the long pixel by pixel correction process even harder to implement and implies a very good stabilization.

According to a third prior art, for example described in US 2003/0164927 or in JP 4053374, or in DE 102008019726, it is known a preliminary step determining the color correction to be then applied to the data to be projected on the color non neutral projection surface. In this preliminary correction determination step, the key concept is to capture a projected image. The projected image can be a reference image such as a white image or a colorized mire, or the information or the data themselves. In all those cases, the method is able to compare the color rendition of the projected data to reference data corresponding to what should be the color rendition if data were projected on a color neutral projection surface, and then to adapt them in order to make the projected data on the color non neutral projection surface appear as natural, so as unbiased. However, there are still the problems of being able to differentiate exactly the projected data from the background of the bare projection surface, even if not so stringent as in second prior art. Besides, there is always this preliminary supplementary step of projecting a first image, either white or colorized mire. There is also the need to be able to capture it during its projection which is not possible when the camera is not aligned with the projector.

### SUMMARY

An object of the embodiments is to alleviate at least partly the above mentioned drawbacks.

More particularly, the embodiments aim to use a simpler method where no projected data, like any white image or any colorized mire, are used to compute a color bias and a corresponding color correction. Quite surprisingly, according to the embodiments, a passive capture of the bare projection surface appears to be sufficient to derive a representative color bias of the projection surface and to derive an efficient color correction which can be used for the whole image to be projected and which can be used for all the images to be projected on this bare projection surface. This is especially the case when the bare projection surface presents a rather uniform color. Embodiments then result in an efficient result with a very quick and simple implementation.

According to embodiments, the method will perform a single shot of the color non neutral projection surface, will deduce a color bias of the bare projection surface, which means of the projection surface alone, as it stands with no projected data on it, will deduce a global color correction to be applied to the whole of all the following images to be projected on the projection surface so that all the projected images appear on the color non neutral projection surface as or nearly as if the projection surface was color neutral. No projected data, if any, will be taken into account in the color bias computation of the bare projection surface.

According to embodiments, there are one or more of the following several advantages linked to the simple and efficient proposed image projection method: the user interaction is native, there is no need to project a mire or reference image for calibrating the system, the position of the projectors related to the camera has no importance, this is a simple and low cost solution especially well dedicated to the smart phones or to the tablet devices. Indeed, preferably, red, green and blue gains are computed once only, based on the passive shot of the bare projection surface, and can be applied to all pixels of all projected images and to all pixels of all projected images of the videos. In case of video projections, the lack of stabilization is no more a problem, since neither retroaction nor latencies are required.

The image projection method according to embodiments, is especially well adapted for portable devices of rather limited size, like smart phones and tablets which are able to project data. Nevertheless, it is not restricted to those portable devices of rather limited size and can be used by other projecting devices, including pico-projectors or not; those other projecting devices may include a camera or not. If they don't include a camera, then the first passive shot of the projection surface, needed to be able to compute a color bias of the bare projection surface, can also be done by an external device, which means by a device external to the projecting device.

This object and other objects may be achieved with an image projection method on a color non neutral projection surface, comprising: capturing one shot of said projection surface, computing a color bias of a bare projection surface which is at least a portion of said captured projection surface, computing a color correction corresponding to said color bias, applying said color correction to several images projected on said projection surface. A bare portion of the captured projection surface is a portion of the captured projection surface where the projection surface is bare, without any projection of any reference image or any other signal which could bias the color of the projection surface as it stands alone.

According to some embodiments, capturing one shot of said projection surface is performed without projecting any reference image on the bare projection surface before capturing said one shot of said bare projection surface.

According to some embodiments, if a square or other specific area delimitation is projected on the bare projection surface, then this projected element is excluded from the captured projection surface before performing the color bias computing. So, this projected element is not taken into account when computing the color bias.

Preferably, the image projection method on a color non neutral bare projection surface, comprises capturing one shot of said bare projection surface, computing a color bias of said captured bare projection surface, computing a color correction corresponding to said color bias, applying said color correction to several images projected on said bare projection surface.

This object and other objects may also be achieved with a user equipment comprising: a camera adapted to capture one shot of a projection surface, a processor adapted to compute a color bias of at least a bare portion of said captured projection surface, and adapted to compute a color correction corresponding to said color bias, a projector adapted to apply said color correction to several images (40) projected on said projection surface. Preferably, the user equipment is a smart phone or a cell phone or a tablet.

Preferred embodiments comprise one or more of the following features:
- said color bias is the same for the whole bare projection surface and wherein said color correction is the same for all parts of said several images.
- said one shot is a delimited shot with projection of an area delimitation and wherein such projected area delimitation is excluded from captured projection surface when computing said color bias.
- said color bias is computed through: computing averages of at least three color components, preferably exactly three color components, comparing said computed averages to corresponding values of a color neutral image, computing said color correction from said comparisons.

- said three color components are red, green and blue.
- said color correction is computed through increasing all the lowest color components to the level of the highest color component.
- said color correction is computed through decreasing all the highest color components to the level of the lowest color component.
- said color correction is computed through increasing all the color components lower than a medium color component to the level of said medium color component and decreasing all the color components higher than said medium color component to the level of said medium color component.
- said shot capturing is performed by a camera of a device which also includes a projector projecting said several images on said bare projection surface.
- said camera and said projector are implemented on different sides of said device.
- the image projection method is performed by a smart phone or by a cell phone or by a tablet.
- said several images projected on said bare projection surface are projected by a projector which has a total volume less than 5cm³, preferably less than 3cm³.
- a computer program product comprising a computer readable medium, having thereon a computer program comprising program instructions, the computer program being loadable into a data-processing unit and adapted to cause execution of the method according to embodiments when the computer program is run by the data-processing unit.

According to some embodiments, the color non neutral projection surface is a uniform color projection surface which can be for example a uniform color wall or a uniform color screen.

According to some embodiments, when applying said color correction, creation of saturated data is avoided.

According to some embodiments, when applying said color correction, application of gains below the value of the unity, to saturated data, is avoided.

Further features and advantages of the embodiments will appear from the following description, given as non-limiting examples, with reference to the accompanying drawings listed hereunder.

### BRIEF DESCRIPTION OF THE DRAWINGS

Fig. 1 shows an example of projection method on a projection surface according to the state of the art.
Fig. 2A and 2B show two data sets projected respectively on a color neutral projection surface and on a color non neutral projection surface according to the state of the art.
Fig. 3 shows an example of projection method on a projection surface according to embodiments.
Fig. 4 shows an example of user equipment adapted to implement an example of projection method on a projection surface according to embodiments.
Fig. 5A and 5B show two data sets projected respectively on a color neutral projection surface and on a color non neutral projection surface according to embodiments.
Fig. 6 shows an example of performing the steps of projection method on a projection surface according to embodiments.
Fig. 7A, 7B and 7C, show three more detailed examples of the shot capturing step of projection method on a projection surface according to embodiments.

### DETAILED DESCRIPTION

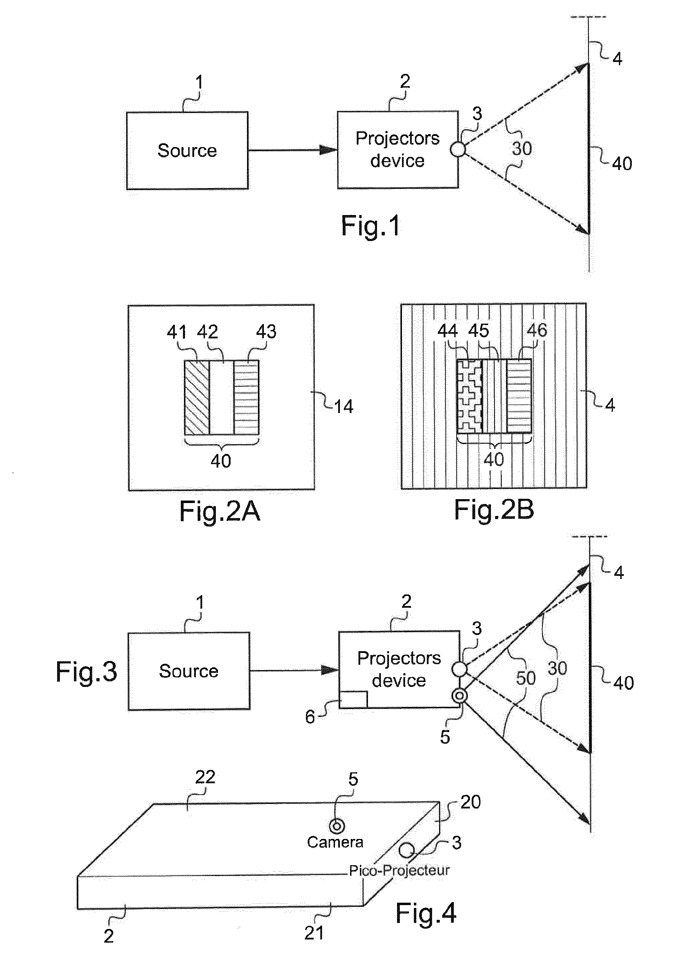

Figure 1 shows an example of projection method on a projection surface according to the state of the art. The projection system comprises a data source 1, a projecting device 2, a projector 3 included in the projecting device 2, a projection surface 4. The projector 3 has a field of view 30. The source 1 provides, to the projecting device 2, data to be projected on the projection surface 4. The projector 3 projects the data 40 on the projection surface 4, within its field of view 30.

Figures 2A and 2B show two data sets projected respectively on a color neutral projection surface and on a color non neutral projection surface, according to the state of the art.

In figure 2A, data 40 are projected on a color neutral projection surface 14 which is a white projection surface 14. Projected data 40 include three vertical lines 41, 42, 43, respectively colored in green, white and blue. Projected on this white projection surface 14, those vertical lines 41 to 43 respectively appear as green, white and blue, which means as natural.

In figure 2B, on the contrary, data 40 are projected on a color non neutral projection surface 4, which is for example an orange projection surface 4. Projected data 40 include three vertical lines 44, 45, 46, respectively colored in mix of green and orange, orange, and mix of blue and orange (which vertical lines 44 to 46 are the result of projecting vertical lines 41 to 43 on this orange projection surface). Projected on this color non neutral projection surface 4, those vertical lines 44 to 46 respectively appear as biased green, no more white and biased blue, which means as biased colors, which also means as non natural colors. The aim of embodiments of the proposed image projection method is to make the projected data 40 appear on the color non neutral projection surface 4 exactly or very close to the way they would appear on the white projection surface 14, which means as vertical lines respectively green, white and blue, with no more orange bias mixed in.

Figure 3 shows an example of projection method on a projection surface according to embodiments. The main difference with the system of figure 1 is that the projecting device 2 includes a camera 5, here located on the same side of the projecting device 2 as the projector 3. The camera 5 presents a field of view 50. As a preliminary step to the proposed image projection method, the camera 5 captures a single shot of the bare color non neutral projection surface 4. This captured image is used to compute the color bias of the bare color non neutral projection surface 4. Hence, from this color bias, a color correction is deduced, which is to be applied to all pixels of all images to be then projected by the projector 3 on the bare color non neutral projection surface 4. The projecting device 2 also comprises a processor 6 adapted to compute the color bias of at least a bare portion of the captured projection surface 4, and adapted to compute the color correction corresponding to this color bias.

Figure 4 shows an example of user equipment adapted to implement an example of projection method on a projection surface according to embodiments. The user equipment 2 is a projecting device which may implement other functions, like a telecommunication function, for example in a cellular network. This user equipment 2 can present for example a roughly parallelepiped shape. This user equipment 2 can present several faces or sides, like its sides 20, 21 and 22. The pico-projector 3, which is a very small projector of for example about 2 cm³ of total volume, is located on a side 20, whereas the camera 5 is located on another side 22. With this kind of user equipment 2, the image projection method according to the third prior art which needs the projection of a white image or of a colorized mire, would be simply impossible to perform. So, the proposed image projection method according to embodiments presents a supplementary advantage over the third prior art, it also allows for more flexibility in the design of the user equipment 2.

This is all the more true for small portable user equipments like smart phones or like tablets. With the proposed image projection method according to embodiments, the image capture by the camera 5 must no more be done simultaneously to the data projection by the pico-projector 3. So, for smart phones and for tablets, size and position of all elements are optimized and the design freedom offered by the proposed image projection method according to embodiments can be precious.

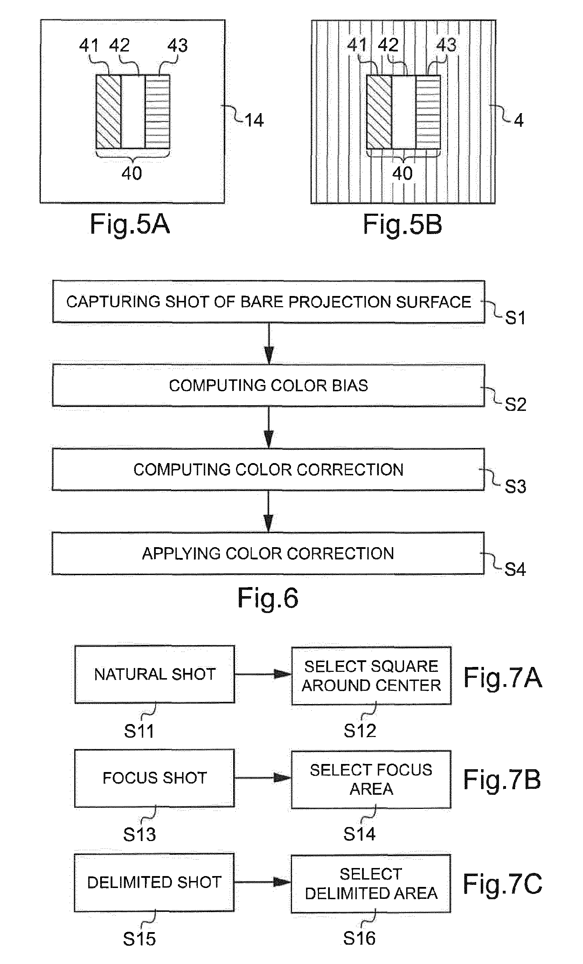

Figures 5A and 5B show two data sets projected respectively on a color neutral projection surface and on a color non neutral projection surface according to embodiments. In figure 5A, data 40 are projected on a color neutral projection surface 14 which is a white projection surface 14, as in figure 2A. Projected data 40 include three vertical lines 41, 42, 43, respectively colored in green, white and blue. Projected on this white projection surface 14, those vertical lines 41 to 43 respectively appear as green, white and blue, which means as natural.

In figure 5B, data 40 are also projected on a color non neutral projection surface 4, which is for example an orange projection surface 4. On the contrary to figure 2B, where projected data 40 included three vertical lines 44, 45, 46, respectively colored in mix of green and orange, orange, and mix of blue and orange, in figure 5B, projected data 40 now include, as in figure 5A, three vertical lines 41, 42, 43, respectively colored in green, white, and blue. Projected on this color non neutral projection surface 4, those vertical lines 41 to 43 respectively appear as natural green, natural white and natural blue, which means as natural and unbiased colors. So, the projected data 40 appear on the color non neutral projection surface 4 exactly in the same way as they would appear on the white projection surface 14, which means as vertical lines respectively green, white and blue, with no more orange bias mixed in. The appearance of projected data 40 is exactly the same on figure 5B where they are projected on an orange surface, as on figure 5A where they are projected on a white surface.

Figure 6 shows an example of performing the steps of projection method on a projection surface according to embodiments. The proposed image projection method comprises successively a step S1 of capturing a single shot of a bare projection surface, a step S2 of computing a color bias of the captured bare projection surface, a step S3 of computing a color correction from the computed color bias, a step S4 of applying the computed color correction to all pixels or all parts of all images which will then be projected on this bare projection surface.

The step S 1 will be described in more detail in relation to figures 7A, 7B and 7C. In the captured image, an area is selected.

In color bias computing step S2, the mean value of each color component of the selected area of the captured image is computed. There can be two, three or even more color components. Preferably there will be exactly three color components. The preferred color components will be red, green and blue, but other color components could be chosen instead. These three mean values will then be used to compensate color information in order to obtain the same color rendering as expected by projecting on a color neutral projection surface. A color neutral projection surface is a surface with the same proportion of red, green and blue values.

In color correction computing step S3, the balance of the red, green and blue channels of the input data will be modified to fit with a color non neutral projection surface which is not well balanced on the red, green and blue channels. For example, if the projection surface is mainly red, the input data will be compensated by increasing the level of green and the level of blue and/or by decreasing the level of red.

Once determined, these levels of green increase and blue increase and / or red decrease will be applied to all parts of all projected images in color correction applying step S4.

In color correction computing step S3, this balance correction can be done of several manners. Here is now described an illustrating example. If the respective mean values of red, green and blue of the color non neutral surface are respectively Mr for the mean value of the red pixels, Mg for the mean value of the green pixels, Mb for the mean value of the blue pixels, the mean values Mr, Mg and Mb, will be respectively as if they were adapted to new mean values Mr', Mg' and Mb' to converge toward a color neutral tone of this adapted projection surface, such that all three mean values Mr', Mg' and Mb' are approximately equal with one another.

The balance can be done related to the red, the green, or the blue color component, and can be done by decreasing and/or increasing the color components values to compensate the lack or the excess of one or two components. If, for example, the minimal mean value is Mr the red mean value and if the maximal mean value is Mb the blue mean value, Mg the green mean value having an intermediate value between Mr and Mb, there are three different options to apply gains.

In a first option, gains can be applied on red and blue components of input data as followed. The red color component is increased to match with the green color component with a red gain, gain to apply to the red color component of input data, which is equal to Mg/Mr. The blue color component is decreased to match with green color component with a blue gain, gain to apply to the blue color component of input data, which is equal to Mg/Mb. Then, in the end, it gives: Mr'=Mb'=Mg'=Mg, which means the adapted bare projection surface is now a color neutral projection surface. Indeed, applying gains on some color components of input data, is an equivalent and can be seen as, an adaptation of the color balance of the projection surface. It means that, what indeed is done, which is applying gains on some color components of input data while not changing the projection surface, would be equivalent to, adapting the color balance of the projection surface while not changing the input data.

In a second alternative option, gains can be applied on red and green components as followed. The red color component is increased to match with the blue color component with a red gain, gain to apply to the red color component of input data, which is equal to Mb/Mr. The green color component is increased to match with blue color component with a blue gain, gain to apply to the blue color component of input data, which is equal to Mb/Mg. Then, in the end, it gives: Mr'=Mb'=Mg'=Mb, which means the adapted bare projection surface is now a color neutral projection surface.

In a third alternative option, gains can be applied on green and blue components as followed. The green color component is decreased to match with the red color component with a green gain, gain to apply to the green color component of input data, which is equal to Mr/Mg. The blue color component is decreased to match with green color component with a blue gain, gain to apply to the blue color component of input data, which is equal to Mr/Mb. Then, in the end, it gives: Mr'=Mb'=Mg'=Mr, which means the adapted bare projection surface is now a color neutral projection surface.

The three preceding options are three different ways to adapt the balance between green, red and blue color components. Related to the image content, if image content includes over exposed data or on the contrary underexposed data, one preceding option can be preferred to the others. This study can be completed by computing other statistics on the image to be projected, such as the minimum, maximum, standard deviation value to do the more adapted choice. In term of image processing, whatever the chosen option to adapt the color channels balance, it is preferred to limit the gain values to some thresholds to avoid creation of saturated data. Moreover, it is also preferred to avoid applying gains below the unity, because it may create biased information on overexposed and on saturated data.

Figures 7A, 7B and 7C, show three more detailed examples of the shot capturing step of projection method on a projection surface according to embodiments. In the step S1 of capturing a single shot of a bare projection surface, first, a type of shot of the projection surface is captured, and second, a specific area of this captured shot is selected. This selected area will be used, and more precisely this selected area only, to compute the color bias of the bare projection surface in this selected area. When the projecting device includes a camera, this camera can be used and will preferably be used to capture a single shot of the projection surface on which the data of the images will be projected. There are several different ways to perform those two operations.

In a first embodiment, shown on figure 7A, to capture the single shot in a substep S11, a natural shot is performed. If the user of the projecting device is asked to take a shot of the projection surface, it is natural for him or for her to center it in the photo, it is a natural gesture to center the photo on the principal object which is photographed. To select the area of interest in a substep S12, to then compute the color bias there from, it is assumed that the surface is centered, so a region around the center can be easily selected, for example a square around the center.

In a second embodiment, shown on figure 7B, to capture the single shot in a substep S 13, a focus shot is performed. If the user of the projecting device is asked to take a shot of the projection surface, by default the focus in a camera is centered, and removing the focus from the center requires indeed manipulation. So, by default, the principal photographed object will be centered. To select the area of interest in a substep S14, to then compute the color bias there from, it is assumed that the area delimited by the focus is exactly known by the manufacturer of the projecting device. If it were to be unknown, anyway it should be sufficient to select the sharpest area in the image. Metrics known by the man skilled in the art are dedicated to that.

In a third embodiment, shown on figure 7C, to capture the single shot in a substep S15, a delimited shot is performed. If the user of the projecting device is asked to take a shot of the projection surface, a specific application linked to the use of the pico-projector of the projecting device can create a square or a specific area in which a portion of the captured projection surface has to appear. To select the area of interest in a substep S16, to then compute the color bias there from, the exact position of the delimited shot is known to the manufacturer of the projecting device.

All these three embodiments are quite native for users, or at least more native than searching a specific setting in a long list of parameters. Whatever the chosen embodiment, a single shot of the projection surface can be captured, and a bare projection surface can be extracted by selecting a specific area of the captured image.

The invention has been described with reference to preferred embodiments. However, many variations are possible within the scope of the invention.

## Claims

1. Image projection method on a color non neutral projection surface (4), comprising:
- capturing (S1) one shot of said projection surface (4),
- computing (S2) a color bias of a bare projection surface which is at least a portion of said captured projection surface (4),
- computing (S3) a color correction corresponding to said color bias,
- applying (S4) said color correction to several images (40) projected on said projection surface (4).

2. Image projection method according to claim 1, wherein said color bias is the same for the whole bare projection surface (4) and wherein said color correction is the same for all parts of said several images (40).

3. Image projection method according to any preceding claim, wherein said one shot is a delimited shot with projection of an area delimitation and wherein such projected area delimitation is excluded from captured projection surface when computing said color bias.

4. Image projection method according to any preceding claim, wherein said color bias is computed (S2) through:
- computing averages of at least three color components, preferably exactly three color components,
- comparing said computed averages to corresponding values of a color neutral image,
- computing said color correction from said comparisons.

5. Image projection method according to claim 4, wherein said three color components are red, green and blue.

6. Image projection method according to claim 4 or 5, wherein said color correction is computed (S3) through increasing all the lowest color components to the level of the highest color component.

7. Image projection method according to claim 4 or 5, wherein said color correction is computed (S3) through decreasing all the highest color components to the level of the lowest color component.

8. Image projection method according to claim 4 or 5, wherein said color correction is computed (S3) through increasing all the color components lower than a medium color component to the level of said medium color component and decreasing all the color components higher than said medium color component to the level of said medium color component.

9. Image projection method according to any preceding claim, wherein said shot capturing (S1) is performed by a camera (5) of a device (2) which also includes a projector (3) projecting said several images (40) on said bare projection surface (4).

10. Image projection method according to claim 9, wherein said camera (5) and said projector (3) are implemented on different sides (20, 21, 22) of said device (2).

11. Image projection method according to any preceding claim, wherein the image projection method is performed by a smart phone or by a cell phone or by a tablet.

12. Image projection method according to any preceding claim, wherein said several images (40) projected on said bare projection surface (4) are projected by a projector (3) which has a total volume less than Scm³, preferably less than 3cm³.

13. A computer program product comprising a computer readable medium, having thereon a computer program comprising program instructions, the computer program being loadable into a data-processing unit and adapted to cause execution of the method according to any of preceding claims when the computer program is run by the data-processing unit.

14. User equipment comprising:
- a camera (5) adapted to capture one shot of a projection surface (4),
- a processor (6) adapted to compute a color bias of at least a bare portion of said captured projection surface, and adapted to compute a color correction corresponding to said color bias,
- a projector (3) adapted to apply said color correction to several images (40) projected on said projection surface (4).

15. User equipment according to claim 14, wherein the user equipment (2) is a smart phone or a cell phone or a tablet.
